# EUROPÄISCHE PATENTSCHRIFT

(11) **EP 0 494 353 B1**
(45) Veröffentlichungstag und Bekanntmachung des Hinweises auf die Patenterteilung: **04.10.1995**
(21) Anmeldenummer: 91119098.1
(22) Anmeldetag: 09.11.1991
(51) Int. Cl.: B60K 11/04, F01P 11/10

(54) **Kühleraggregat für einen Kraftfahrzeugmotor**
Cooling unit for a vehicle engine
Unité de refroidissement pour un moteur de véhicule

(30) Priorität: 11.12.1990 DE 4039490
(43) Veröffentlichungstag der Anmeldung: 15.07.1992
(73) Patentinhaber: Behr GmbH & Co., D-70469 Stuttgart (DE)
(72) Erfinder: Ghiani, Franco, W-7120 Bietigheim-Bissingen (DE); Glock, Fritz, Dipl.-Ing. (TH), W-7012 Fellbach-Öffingen (DE)
(74) Vertreter: Wilhelm & Dauster Patentanwälte European Patent Attorneys

(56) Entgegenhaltungen:
- EP-A- 0 263 732
- DE-A- 2 648 407
- PATENT ABSTRACTS OF JAPAN vol. 9, no. 275 (M-426)(1998) 2. November 1985 & JP-A-60 119 321 (NIPPON DENSO K.K.)

## Beschreibung

Die Erfindung betrifft ein Kühleraggregat für einen Kraftfahrzeugmotor mit einem Kühler, bestehend aus einem zwischen Wasserkästen gehaltenen Rippenrohrblock und mit einer am Kühler befestigten Lüfterhaube mit mindestens einem integrierten und von einem Elektromotor getriebenen Kühllüfter, wobei den Wasserkästen Einrichtungen zur Befestigung am Fahrzeug zugeordnet sind.

Ein Kühleraggregat dieser Art ist bekannt (DE-PS 22 33 737). Bei dieser Bauart ist der Kühllüfter in einer Nabe gelagert, die mit sternartig nach außen verlaufenden Streben mit klauenartigen Enden an gegenüberliegenden Schmalseiten des Rippenrohrblockes gehalten ist. Solche Bauarten sind daher, da die Befestigung des Kühllüfters an den Lamellen erfolgt, nicht immer ausreichend stabil. Es besteht auch keine Möglichkeit, außer an den Wasserkästen, über die der Kühler im Fahrzeug befestigt wird, noch zusätzliche Teile anzubringen.

Bekannt ist es auch (DE-OS 39 16 777), die Kühlerzarge zu einer Halterung für den Kühler auszugestalten, den Kühler fest mit der Zarge zu verschrauben und dann die so gebildete Einheit über Befestigungseinrichtungen im Fahrzeug zu verankern, die der Kühlerzarge zugeordnet sind. Diese Bauarten besitzen zwar eine steife Kühlerzarge, die Montage ist aber relativ aufwendig, weil zum einen der Kühler mit der Zarge verschraubt werden muß und weil die Zarge dann an den am Motor sitzenden Lüfter angepaßt werden muß, ehe sie im Fahrzeug befestigt werden kann.

Aus dem Patent Abstracts of Japan vol. 9, Nr. 275 vom 02.11.85 und aus der JP-A-60 119 321 ist eine Anordnung eines Kühleraggregates bekannt, bei der man den oberen und unteren Wasserkasten mit U-förmigen Einhängelaschen versehen hat und der daran zu befestigenden Lüfterhaube formschlüssig in diese Laschen greifende Haken und Zapfen zugeordnet hat. Eine Möglichkeit, zusätzlich ein anderes Bauteil, beispielsweise einen Kondensator anzuordnen, ist nicht vorgesehen.

Dies gilt auch für die EP 0 263 732 A1, wo die Aufhängung der Lüfterhaube mit Steckzapfen vorgenommen ist.

Der Erfindung liegt die Aufgabe zugrunde, ein Kühleraggregat der eingangs genannten Art, bei dem die zuletzt genannten Anpaßarbeiten einer Zarge an den Kühllüfter überflüssig sind, so auszubilden, daß eine einfache und schnelle Montage zwischen Lüfterhaube und Kühler einerseits möglich ist, andererseits die Befestigung aber auch stabil genug ist, um noch zusätzliche Teile des Kühleraggregates modulartig an der Lüfterhaube zu befestigen.

Zur Lösung dieser Aufgabe werden bei einem Kühleraggregat der eingangs genannten Art die kennzeichnenden Merkmale des Patentanspruches 1 vorgesehen. Diese Ausgestaltung erlaubt ein einfaches Zusammenfügen von Kühler und Lüfterhaube. Ein aufwendiger Schraubvorgang wird überflüssig. Trotzdem kann die Ausgestaltung stabil genug ausgeführt werden, um zum einen einen kompakten Zusammenhalt zwischen Kühler und Lüfterhaube mit Kühllüfter zu erreichen und andererseits an der auf diese Art am Kühler befestigten Lüfterhaube bei Bedarf auch noch einen Kondensator zuzuordnen. Die nach einer Seite abstehenden Abstützplattformen eröffnen die Möglichkeit der Anordnung von formschlüssig ineinandergreifenden Elementen in einem Abstand zum Kühler, so daß dadurch wahlweise auch noch ein Kondensator montiert werden kann. Dies ermöglicht die Verwendung des neuen Kühleraggregates für Fahrzeuge, die entweder mit oder ohne eine Klimaanlage ausgerüstet sind. Dabei wird auch eine gewisse Dehnung der Rohre des Kühlers bzw. der Kondensatorrohre im Betrieb möglich, ohne daß dadurch die Steckverbindung zusätzlichen und unter Umständen zu Bruchgefahren führenden Spannungen ausgesetzt wird.

Vorteilhafte Weiterbildungen des Erfindungsgedankens sind in den Unteransprüchen gekennzeichnet. Die Befestigung zwischen Lüfterhaube und Kühler kann an vier Stellen erfolgen, die zweckmäßig jeweils den Ecken des Kühlers und der Lüfterhaube zugeordnet werden können. Die Merkmale der Ansprüche 3 und 4 erlauben in ähnlich einfacher Weise die Befestigung des Kondensators an der Lüfterhaube, wie dies auch für die Befestigung zwischen Lüfterhaube und Kühler gilt. Die Merkmale des Anspruches 5 sichern eine stabile Endlage des Kondensators zwischen Lüfterhaube und Kühler und die Merkmale des Anspruchs 6 schließlich sichern eine dauerhafte, aber dennoch leicht lösbare Verbindung zwischen Kühler, Lüfterhaube und/oder Kondensator. Die Merkmale des Anspruches 9 erlauben die Ausbildung massiver Stützplattformen, auf denen sich entsprechende Auflageplatten der Lüfterhaube flächig auflegen können. Diese Ausgestaltung läßt sich vorteilhaft für Kunststoffwasserkästen und für aus Kunststoff hergestellte Lüfterhauben verwenden. Vorteilhaft ist es auch, nach den Merkmalen der Ansprüchen 10 und 11 die unteren Auflageplatten der Lüfterhaube mit Steckzapfen und die zugeordneten Stützplattformen am unteren Ende des Kühlers mit Bohrungen zu versehen, weil dadurch eine montagefreundliche Ausführungsform gebildet wird, bei der die Lüfterhaube mit ihren beiden Steckzapfen zur Montage in die Bohrungen der Stützplattformen des Kühlers eingeführt, dann gegen die Frontseite des Kühlers verschwenkt und nach einem geringen Anheben auf die Steckzapfen der oberen Stützplattformen des Kühlers aufgehängt werden kann.

Die Merkmale des Anspruches 12 erlauben es in einfacher Weise, das Kühleraggregat mit oder ohne einen Kondensator zu liefern, so daß für Fahrzeuge mit oder ohne Klimaanlage ein und dasselbe Kühleraggregat verwendbar ist, das nach dem Zusammenbau von Kühler und Lüfterhaube entweder noch mit einem Kondensator versehen wird oder nicht.

Die Erfindung ist in der Zeichnung anhand eines Ausführungsbeispieles dargestellt und wird im folgenden erläutert. Es zeigen:
- Fig. 1: eine Frontansicht eines erfindungsgemäß aufgebauten Kühleraggregates,
- Fig. 2: die Draufsicht auf das Kühleraggregat der Fig. 1 in Richtung des Pfeiles II der Fig. 1 gesehen,
- Fig. 3: die Seitenansicht des Kühleraggregates der Fig. 1 in Richtung des Pfeiles III in Fig. 1 gesehen,
- Fig. 4: die Rückansicht des Kühlers des Kühleraggregates der Fig. 1 - von der zu der Ansicht der Fig. 1 entgegengesetzten Seite gesehen und ohne die angebaute Lüfterhaube -,
- Fig. 5: die Seitenansicht des Kühlers der Fig. 1,
- Fig. 6: die Draufsicht auf den Kühler der Fig. 4,
- Fig. 7: die Lüfterhaube des Kühleraggregates der Fig. 1, jedoch ohne angebauten Kühler und ohne eingesetzte Lüfter,
- Fig. 8: die Seitenansicht der Lüfterhaube der Fig. 7,
- Fig. 9: die Draufsicht auf die Lüfterhaube der Fig. 7,
- Fig.10: die Ansicht des Kondensators des Kühleraggregates der Fig. 1 von der gleichen Seite wie der Kühler nach Fig. 4 gesehen, jedoch ohne Lüfterhaube und ohne Kühler,
- Fig.11: die Draufsicht auf den Kondensator der Fig. 10,
- Fig.12: die Seitenansicht des Kondensators der Fig. 10 in Richtung des Pfeiles XII gesehen,
- Fig.13: die Seitenansicht des Kondensators der Fig. 10 von der entgegengesetzten Seite aus gesehen, und
- Fig.14: eine vergrößerte Darstellung einer Teil-Seitenansicht von Kühler und Lüfterhaube, aus der die Befestigung dieser beiden Teile aneinander und die Art der oberen Befestigung des Kühlers am Fahrzeug deutlich sichtbar ist.

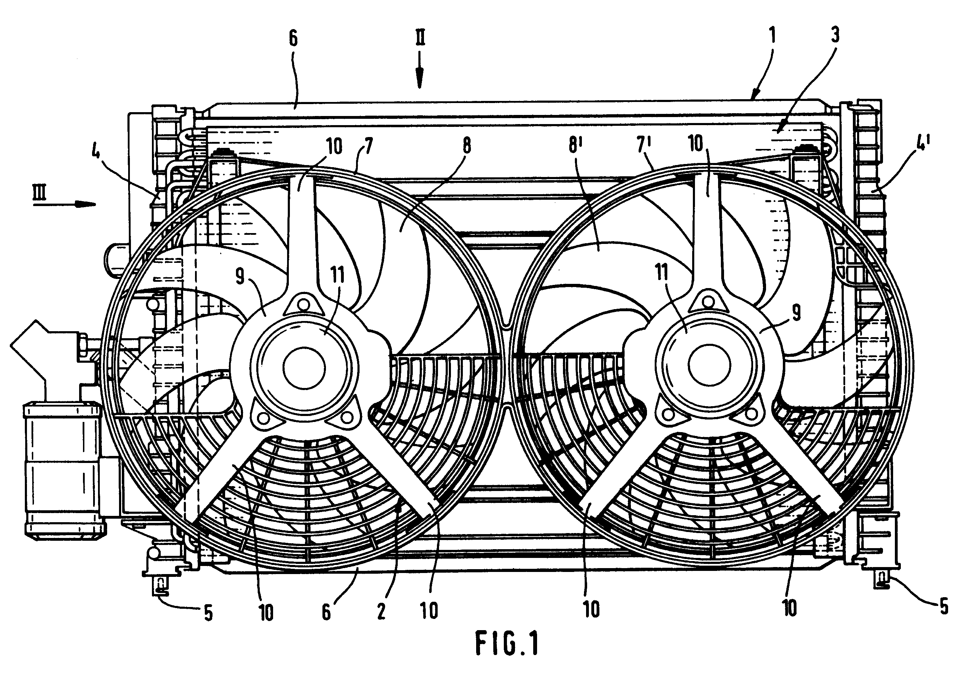

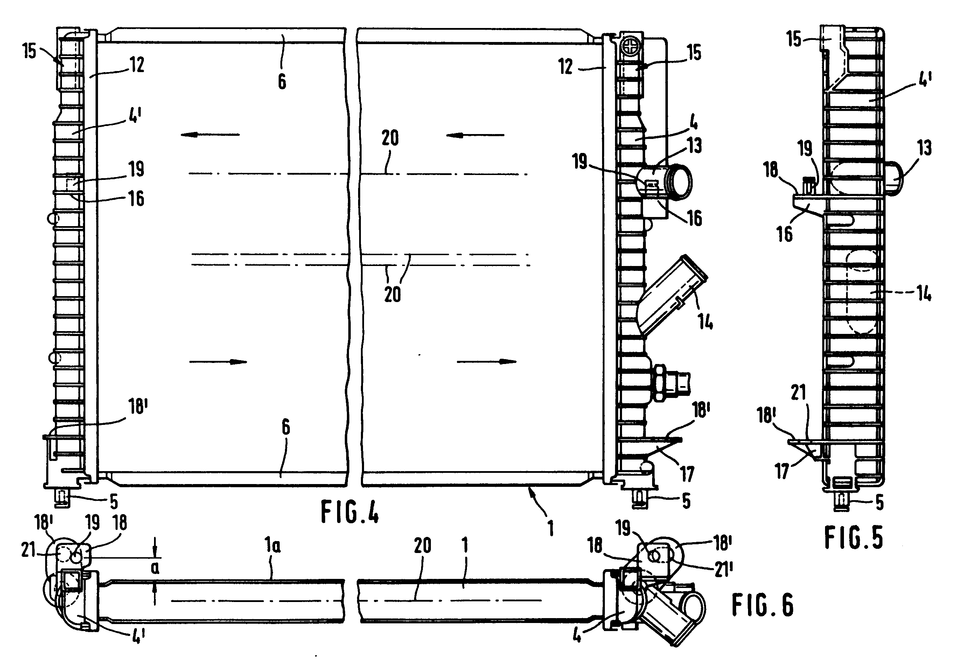

In den Fig. 1 bis 3 ist ein Kühleraggregat, bestehend aus einem Kühler (1), einer Lüfterhaube (2) und aus einem Kondensator (3) gezeigt, das als kompakte Modulbaueinheit in den Motorraum eines Fahrzeuges eingesetzt werden kann. Dies kann dadurch geschehen, daß der Kühler (1), der an seinen beiden Wasserkästen (4, 4') mit nach unten abstehenden Zapfen (5) versehen ist, mit diesen Zapfen in an sich bekannter Weise unter Zwischenfügung elastischer Scheiben in entsprechende Öffnungen von Befestigungsstellen am Fahrzeug eingesetzt wird. Wie im einzelnen noch anhand der Fig. 4 bis 6 zu erläutern sein wird, besteht der Kühler (1) aus den beiden Wasserkästen (4, 4'), zwischen denen in der Fig. 1 quer verlaufende Rohre eines Rippenrohrblockes gehalten sind, wobei in bekannter Weise Seitenteile (6) die freien Enden der lamellenartig angeordneten Rippen nach oben und unten schützen. Der Kühler (1) dient als tragendes Bauteil des modulartig aufgebauten Kühleraggregats. Der Kühler wird an seinen beiden oberen Seiten mit Hilfe von Schrauben an Querträgern des Fahrzeuges befestigt, die in noch zu erläuternder Weise in Aushebungen (15) an der oberen Stirnseite jedes Wasserkastens eingreifen.

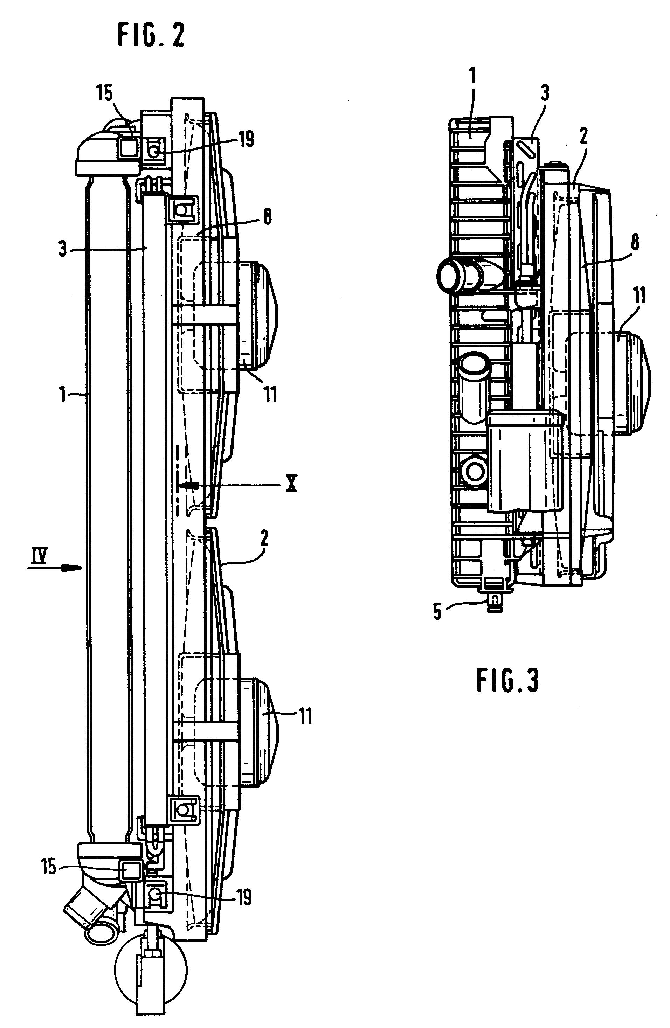

Fest mit dein Kühler (1) verbunden ist eine Lüfterhaube (2), die beim Ausführungsbeispiel mit zwei Lüfterzargen (7, 7') für je einen Kühllüfter (8, 8') versehen ist, dessen Lüfterschaufeln gekrümmt ausgebildet sind und an einem Lüfterrad sitzen, dessen Achse in einer Nabe (9) der Lüfterhaube (2) gelagert ist, die mit drei Speichen (10) jeweils innerhalb der Zarge (7) gehalten ist. Jedes Lüfterrad (8, 8') ist mit einem Elektromotor (11) versehen, der ebenfalls innerhalb der Nabe (9) gehalten ist. Wie die Fig. 2 und 3 zeigen, sitzt zwischen Kühler (1) und der Lüfterhaube (2) ein Kondensator (3), der in noch näher zu erläuternder Weise in einen Zwischenraum zwischen Kühler (1) und Lüfterhaube (2) eingeschoben und an der Lüfterhaube (2) gehalten ist.

Anhand der Fig. 4 bis 6 und 7 bis 9 soll zunächst der Aufbau von Kühler (1) und Lüfterhaube (2) näher erläutert werden, um deutlich zu machen, auf welche Art und Weise die Lüfterhaube (2) mit dem Kühler (1) verbunden ist.

Wie die Fig. 4, 5 und 6 zeigen, besteht der Kühler (1) zunächst aus den beiden Wasserkästen (4, 4') sowie aus einer Vielzahl von zwischen diesen Wasserkästen verlaufenden, mit ihren Achsen (20) senkrecht zu den Rohrböden (12) der Wasserkästen (4, 4') ausgerichteten Rohren. Die Anordnung der Rohre ist nicht im einzelnen gezeigt. In ebenfalls nicht näher gezeigter, weil bekannter Weise verlaufen senkrecht zu den Rohrachsen, d.h. parallel zu den Rohrböden (12) eine Reihe von lamellenartig auf die Rohre aufgeschobenen Rippen, deren obere und untere Enden durch Seitenteile (6) geschützt sind, die auch die Stabilität des Kühlers (1) gewährleisten.

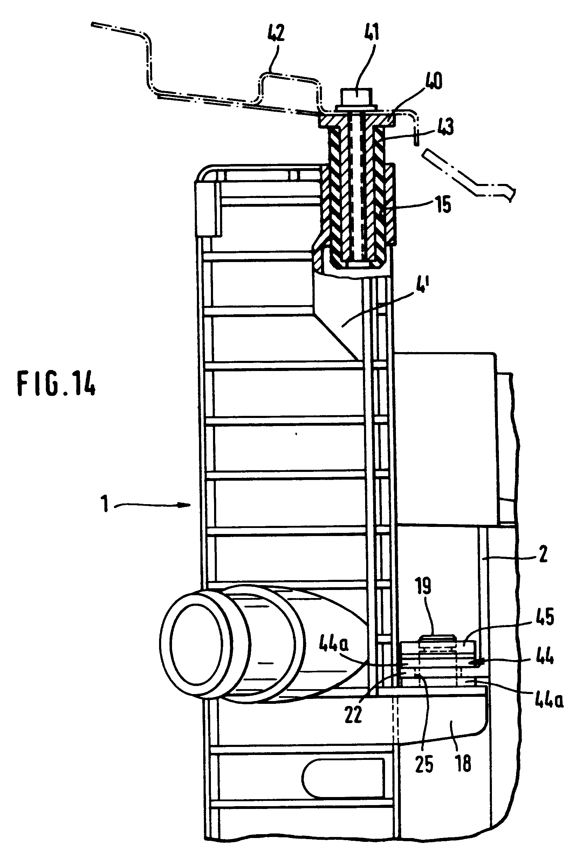

Beim Ausführungsbeispiel sind beide Wasserkästen (4 und 4') aus Kunststoff hergestellt, wobei der Wasserkasten (4) sowohl mit einem Zulaufstutzen (13) als auch mit dem Abflußstutzen (14) versehen ist. Jeder der Wasserkästen (4, 4') ist an seinem unteren Ende mit den vorher schon erwähnten Steckzapfen (5) versehen, mit denen der Kühler (1) und die mit ihm verbundenen Aggregatteile im Fahrzeug befestigt werden können. Jeder Wasserkasten (4, 4') ist darüber hinaus aber auch an seinem oberen Ende mit Ausnehmungen (15) versehen, in die, wie noch anhand von Fig. 14 deutlich wird, Gewindehülsen (40) eingesetzt werden, in die wiederum zur Befestigung des Kühlers (1) am oberen Ende Schrauben (41) eingreifen, die durch Querträger (42) durchgreifen, die im Motorraum des Fahrzeuges angeordnet sind.

Jeder Wasserkasten (4, 4') ist mit zwei Ansätzen (16 und 17) versehen, die jeweils nach der gleichen Seite abstehen und jeweils mit einer Stützplattform (18 und 18') versehen sind. Die Stützplattformen (18) der oberen Ansätze (16) einerseits und die Stützplattformen (18') der unteren Ansätze (17) andererseits liegen jeweils in einer parallel zu den Rohrachsen (20) verlaufenden gemeinsamen Ebene. Die Fig. 5 und 6 zeigen, daß die Stützplattformen (18 und 18') jeweils nach einer Seite abstehen. Die oberen Stützplattformen (18) sind dabei beide mit einem nach oben abragenden Steckzapfen (19) und die unteren Plattformen (18') mit Bohrungen (21) versehen, wobei eine der beiden Stützplattformen (18') mit einem Langloch (21') versehen ist, dessen Längsachse ebenfalls parallel zu den Rohrachsen (20) verläuft. Die Steckzapfen (19) und die Bohrungen (21 bzw. 21') sind so angeordnet, daß sie einen Abstand (a) von der Rückseite (1a) des Kühlers (1) aufweisen.

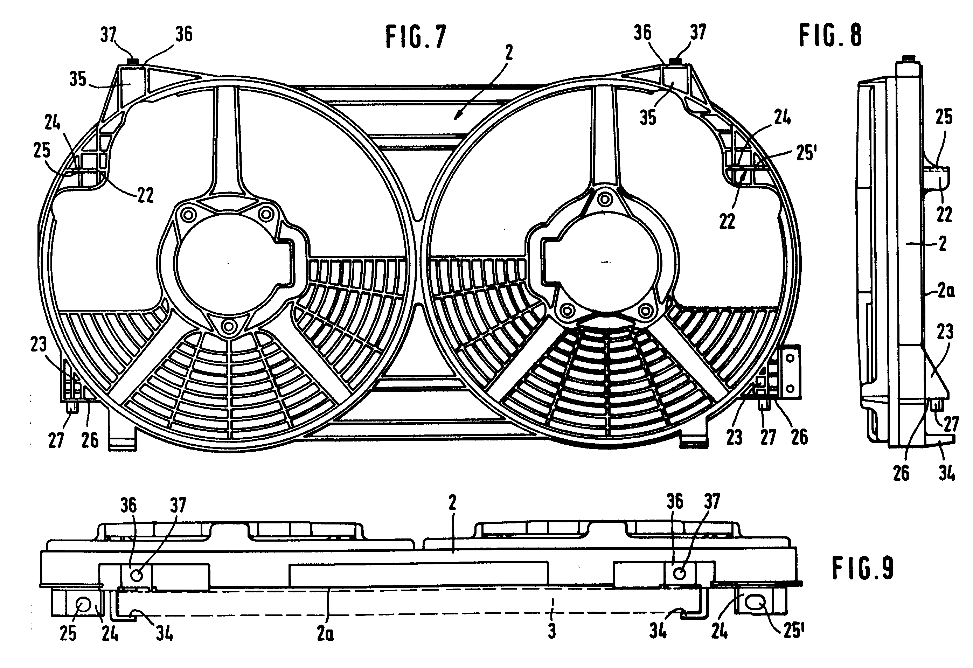

Die Fig. 7 bis 9 zeigen, daß die Lüfterhaube (2) mit korrespondierenden Ansätzen (22 und 23) versehen ist, von denen die oberen Ansätze (22) ebenfalls in einer gemeinsamen, parallel zu den Rohrachsen (20) verlaufenden Ebene liegen und je eine Auflageplatte (24) (Fig. 8 und 9) mit je einer Bohrung (25) bilden, von denen die Bohrung (25') wiederum als Langloch mit einer parallel zu den Rohrachsen (20) verlaufenden Längsachse ausgebildet ist.

Jeder der Ansätze (23) bildet ebenfalls eine Auflageplatte (26), von der aus ein Steckzapfen (27) nach unten abragt. Bei der Montage wird die Lüfterhaube (2) mit diesen Steckzapfen (27) in die Bohrungen (21 bzw. 21') der Stützplattformen (18') eingesteckt und dann leicht geschwenkt, bis die Ansätze (22) mit ihren Bohrungen (25, 25') über die nach oben ragenden Steckzapfen (19) der Ansätze (16) des Kühlers (1) geschoben werden können. Die Lüfterhaube (2) kann dann um ein Stück nach unten geschoben werden, bis ihre Auflageplatten (26) einerseits auf den Stützplattformen (18') und die Auflageplatten (24) andererseits auf den Stützplattformen (18) des Kühlers (1) aufsitzen. Der oben aus der Auflageplatte (24) und aus der Bohrung (25) herausragende Teil des Steckzapfens (19) wird dann in bekannter Weise durch eine Sicherungsfeder, die in eine umlaufende Nut des Steckzapfens (19) eingreift, daran gehindert, wieder aus der Auflageplatte (24) herausgezogen werden zu können. Die Lüfterhaube (2) sitzt auf diese Weise fest und stabil am Kühler (1).

Wie aus den Fig. 6 und 9 bzw. 5 und 8 jeweils deutlich wird, entsteht bei einer solchen Montage, bedingt durch den Abstand (a) (Fig. 6), zwischen der Rückseite (1a) des Kühlers und der dieser zugewandten Vorderseite (2a) der Lüfterhaube (2) ein Spalt, der dazu ausgenutzt werden kann, wie in Fig. 9 gestrichelt angedeutet, den Kondensator (3) einzuschieben. Dies kann dabei wahlweise je nach gewünschtem Modul für das Kühleraggregat geschehen. Wenn das mit dem Kühleraggregat auszustattende Fahrzeug keine Klimaanlage erhält, so besteht das Kühleraggregat aus Kühler (1) und Lüfterhaube (2) mit den Kühllüftern. Erhält es dagegen eine Klimaanlage, dann wird der Kondensator (3) in den bestehenden Spalt zwischen Kühler (1) und Lüfterhaube (2) eingeschoben. Der Kondensator (3) wird dabei an der Lüfterhaube (2) befestigt, und zwar auf folgende einfache Weise:

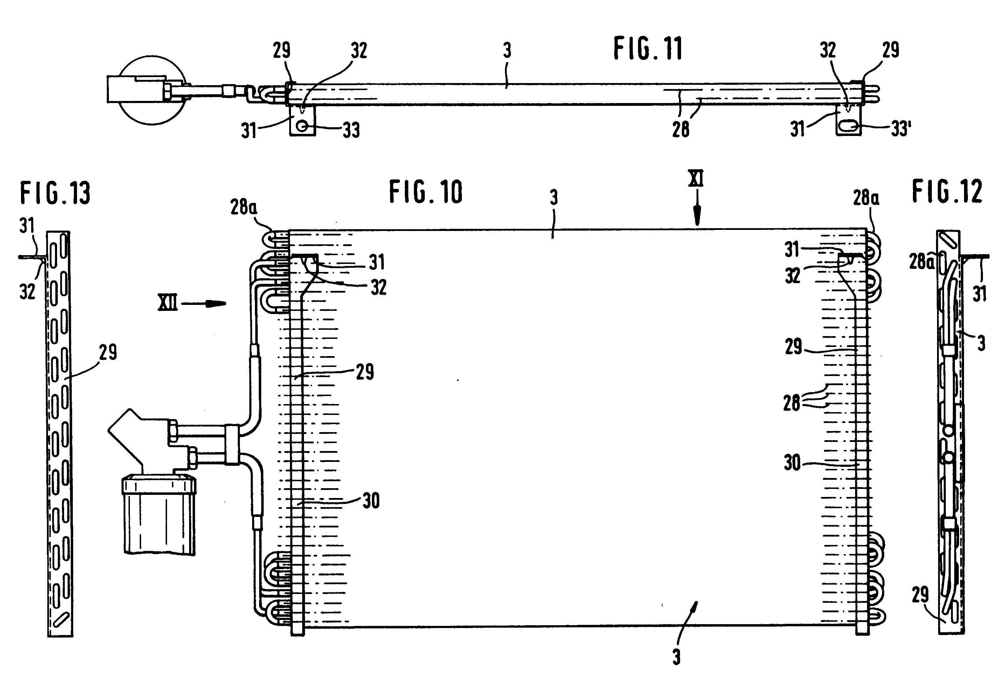

Die Fig. 10 bis 13 zeigen, daß der Kondensator (3), der in seinen Außenabmessungen dem Spalt zwischen Kühler (1) und Lüfterhaube (2) entsprechen muß, aus einer Vielzahl von parallel zueinander verlaufenden Rohren mit Rohrachsen (28) besteht, die - nach dem Einbau des Kondensators - parallel zu den Rohrachsen (20) des Kühlers (1) verlaufen. Die Rohre des Kondensators (3) sind in bekannter Weise in Form von Rohrbögen (28a) an den Enden des Kondensators umgelenkt und sie werden dort durch gemeinsame Halterungen untereinander zu dem etwa rechteckigen Kondensatorblock zusammengehalten. An diesen Halterungen (29), die jeweils aus einem abgewinkelten Blech bestehen, das auch noch in einem umgebogenen und parallel zu den Rohrachsen (28) verlaufenden Streifen (30) übergeht, sind im oberen Bereich des Kondensators (3) zwei Laschen (31) angeformt, die jeweils mit einer Verstärkungssicke (32) versehen sind und Bohrungen (33) aufweisen, von denen die Bohrung (33') in einer der Laschen jeweils wieder als ein Langloch mit einer parallel zu den Rohrachsen (28) des Kondensators (3) verlaufenden Längsachse ausgebildet ist.

Wie Fig. 9 und 8 zu entnehmen ist, besitzt die Lüfterhaube (2) in ihrem unteren Bereich zwei seitlich angeordnete Führungswinkel (34), die den Abmessungen des Kondensators angepaßt sind. Die Lüfterhaube (2) ist außerdem an ihrem oberen Ende mit zwei nach oben ragenden Ansätzen (35) versehen, die je eine Tragplattform (36) mit einem nach oben abragenden Steckzapfen (37) bilden. Die Lage der Steckzapfen (37) ist an die Lage der Bohrungen (33, 33') in den Laschen (31) des Kondensators (3) angepaßt.

Wird daher der Kondensator (3) von oben her in den Zwischenraum zwischen Kühler (1) und Lüfterhaube (2) eingeschoben, so kann er nach unten abgesenkt werden, bis seine Laschen (31) oben auf den Tragplattformen (36) der Lüfterhaube (2) aufliegen und die Steckzapfen (37) durch die Bohrungen (33, 33') hindurchgetreten sind. Die Steckzapfen (37) werden dann in der gleichen Weise, wie vorher schon anhand der Steckhzapfen (19) erwähnt, durch aufgesteckte Sicherungsfedern daran gehindert, wieder aus den Laschen (31) herausgezogen werden zu können. Der Kondensator (3) sitzt auf diese Weise an seinem oberen Ende mit den Laschen (31) sicher auf den Stützplattformen (36) der Lüfterhaube (2) auf. Er wird an seinem unteren Ende von den Führungswinkeln (34) in seiner Lage gehalten.

Fig. 14 zeigt, daß an den oberen Stirnenden jedes Wasserkastens (4, 4') in die Ausnehmungen (15) Hülsen (40) eingesetzt sind, die von einem anvulkanisierten Gummimantel (43) umgeben sind. Die Hülsen (40) sind als Gewindehülsen ausgebildet. In sie werden bei der Montage des kompletten Kühleraggregates nach dem Einführen der Zapfen (5) in die zugeordneten Öffnungen von fahrzeugfesten Stützteilen und nach dem Verschwenken des so eingesetzten Kühleraggregates in seine Endposition, von oben Schrauben (41) eingeführt, die durch Querträger (42) des Fahrzeuges hindurchgreifen. Die Befestigung des Kühleraggregates am Fahrzeug erfolgt daher elastisch. Schwingungen und Vibrationen des Fahrzeuges können von dem Gummimantel (43) der Hülse (40) aufgenommen werden und übertragen sich nicht auf das Kühleraggregat.

Die Fig. 14 zeigt aber auch, daß die Lüfterhaube (2) weitgehend elastisch am Kühler (1) gelagert ist. Das wird dadurch erreicht, daß in die Bohrungen (25) der Ansätze (22) eine Gummihülse (44) eingesetzt ist, die mit zwei Kragen (44a) die Bohrung (25) übergreift und so formschlüssig in dieser gehalten ist. Der untere Kragen sitzt auf der Plattform (18) auf und auf dem oberen Kragen wird eine Scheibe und danach ein in eine umlaufende Nut des Steckbolzens (19) eingreifender Klips (45) aufgesetzt. Eine werkzeugfreie Befestigung ist dadurch möglich. Die Lüfterhaube (2) wird dadurch auch elastisch am Kühler (1) gehalten. Vibrationen der Lüftermotoren werden nicht auf den Kühler (1) übertragen.

Es wird daher deutlich, daß sich durch die Erfindung ein Kühleraggregat in der Art eines Modules in einfacher Weise aufbauen läßt, das wahlweise mit- oder ohne Kondensator lieferbar ist. Bei der Gesamtmontage des Kühleraggregates wird es nicht notwendig, aufwendige Schraubverbindungen herzustellen. Es genügt das formschlüssige Einstecken von Führungszapfen in entsprechende Öffnungen und das anschließende Absichern der Lage der Steckzapfen durch Sicherungsfedern. Die gesamte Montage kann weitgehend ohne Werkzeuge vorgenommen werden. Diese Art der Montage eignet sich daher auch besonders dann, wenn nicht nur die Wasserkästen (4, 4'), sondern auch die Lüfterhaube (2) aus Kunststoff hergestellt sind. Die Verbindung von Kunststoffteilen untereinander läßt sich durch die Erfindung in besonders einfacher Weise herstellen.

## Patentansprüche

1. Kühleraggregat für einen Kraftfahrzeugmotor mit einem Kühler, bestehend aus einem zwischen Wasserkästen (4, 4') gehaltenen Rippenrohrblock und mit einer am Kühler befestigten Lüfterhaube (2) mit mindestens einem integrierten und von einem Elektromotor getriebenen Kühllüfter (8, 8'), wobei den Wasserkästen Einrichtungen zur Befestigung am Fahrzeug zugeordnet sind und sie zur Befestigung der Lüfterhaube mit nach einer Seite abstehenden Ansätzen mit Ausnehmungen oder Vorsprüngen versehen sind, die mit korrespondierenden Ansätzen an der Lüfterhaube formschlüssig zusammensteckbar sind, dadurch gekennzeichnet, daß die Ansätze (16, 17) jeweils mit einer Stützplattform (18, 18') versehen sind, die in einer parallel zu den Rohrachsen (20) verlaufenden Ebene liegt und daß jeder Stützplattform (18, 18') der Wasserkästen (4, 4') eine an einem Ansatz (22, 23) der Lüfterhaube (2) angeordnete, korrespondierend ausgebildete Auflageplatte (26, 24) zugeordnet ist, wobei die in den Stützplattformen (18, 18') vorgesehenen Einrichtungen (Steckzapfen 19, Bohrungen 21) zum formschlüssigen Zusammenstecken von Wasserkästen und Lüfterhaube in einem Abstand (a) von der Frontseite (1a) des Kühlers angeordnet sind, der ausreichend groß ist, um einen Einschubraum für die wahlweise Anordnung eines Kondensators (3) zwischen Kühler (1) und Lüfterhaube (2) zu schaffen.

2. Kühleraggregat nach Anspruch 1, dadurch gekennzeichnet, daß die Mittel zum formschlüssigen Zusammenstecken aus von einer der Stützplattformen (18) nach oben abragenden Steckzapfen und aus an der anderen Stützplattform (18') vorgesehenen Bohrungen (21) sowie aus korrespondierend der Lüfterhaube zugeordneten Steckzapfen (27) und Bohrungen (25) bestehen.

3. Kühleraggregat nach Anspruch 2, dadurch gekennzeichnet, daß jede der Bohrungen (25) der Auflageplatten (24) der Lüfterhaube (2) mit einer elastischen Hülse (44) versehen ist, die den zugeordneten Steckzapfen (19) am Wasserkasten umgibt.

4. Kühleraggregat nach Anspruch 3, dadurch gekennzeichnet, daß die elastische Hülse (44) formschlüssig in den Bohrungen (25) sitzt.

5. Kühleraggregat nach Anspruch 4, dadurch gekennzeichnet, daß die Stützplattformen (18, 18') in zwei parallel zueinander verlaufenden Ebenen untereinander angeordnet sind.

6. Kühleraggregat nach Anspruch 5, dadurch gekennzeichnet, daß die Stützplattformen (18') in der unteren Ebene mit Bohrungen (21, 21') und die korrespondierenden Auflageplatten (26) der Lüfterhaube (2) mit Steckzapfen (27) versehen sind.

7. Kühleraggregat nach Anspruch 6, dadurch gekennzeichnet, daß mindestens eine der Bohrungen (21') in den Stützplattformen (18') als ein parallel zu den Rohrachsen (20) verlaufendes Langloch (21') ausgebildet ist.

8. Kühleraggregat nach Anspruch 7, dadurch gekennzeichnet, daß die Einrichtungen zur Befestigung der Wasserkästen am Fahrzeug aus Steckzapfen (5) an der beim Einbau unteren Seite und aus Einführöffnungen (15) für Befestigungsschrauben (41) an der oberen Seite bestehen.

9. Kühleraggregat nach Anspruch 8, dadurch gekennzeichnet, daß Einführöffnungen (15) und Steckzapfen (5) jeweils an den entgegengesetzten Stirnenden jedes der beiden Wasserkästen (4, 4') vorgesehen sind, die in der Einbaulage seitlich vom Rippenrohrblock liegen.

10. Kühleraggregat nach Anspruch 9, dadurch gekennzeichnet, daß die Einführöffnungen aus in die Wasserkästen eingeformten Führungen (15) für Gewindehülsen (40) bestehen, in die die Befestigungsschrauben einsetzbar sind.

11. Kühleraggregat nach Anspruch 10, dadurch gekennzeichnet, daß die Gewindehülsen (40) mit einer Gummiummantelung (43) versehen sind, die in die Führungen (15) paßt.

12. Kühleraggregat nach Anspruch 11, dadurch gekennzeichnet, daß die Lüfterhaube (2) an ihrem oberen Ende mit zwei Ansätzen (35) mit je einer Tragplattform (36) und mit einem nach oben abstehenden Steckzapfen (37) und der Kondensator (3) an seinem oberen Ende mit zwei den Tragplattformen der Lüfterhaube (2) zugeordneten Einhängelaschen (31) versehen ist, die jeweils eine Bohrung (33) zum Einstecken des Steckzapfens (37) der Lüfterhaube (2) aufweisen.

13. Kühleraggregat nach Anspruch 12, dadurch gekennzeichnet, daß mindestens eine der Bohrungen (33') in den Einhängelaschen (31) des Kondensators (3) als ein parallel zu den Rohrachsen (28) des Kondensators verlaufendes Langloch ausgebildet ist.

14. Kühleraggregat nach einem der Ansprüche 11 bis 13, dadurch gekennzeichnet, daß die Lüfterhaube (2) zusätzlich an ihrem den Tragplattformen (36) abgewandten unteren Ende mit zwei seitlichen Führungswinkeln (34) zum seitlichen Umfassen des Kondensators versehen ist.

15. Kühleraggregat nach einem der Ansprüche 1 bis 14, dadurch gekennzeichnet, daß die Steckzapfen (19, 37) durch Sicherungsfedern in den zugeordneten Bohrungen gehalten sind.

## Claims

1. A radiator unit for a motor vehicle engine with a radiator consisting of a ribbed pipe block held between radiator tanks (4, 4') and with a fan hood (2) attached to the radiator with at least one integrated, motor-driven radiator fan (8, 8'), whereby the radiator tanks have devices for attachment to the vehicle and are provided with projections which extend to one side with recesses and protrusions for attachment to the fan hood which can he interlocked with corresponding projections on the fan hood, characterised in that the projections (16, 17) are provided with supporting platforms (18, 18') positioned in a plane running parallel to the pipe axes (20) and that each radiator tank (4, 4') supporting platform (18, 18') has a correspondingly designed base plate (26, 24) located on one of the projections (22, 23) on the fan hood (2), whereby the devices provided (pins 19, holes 21) in the supporting platforms (18, 18') to interlock with the radiator tanks and the fan hood are located at a distance (a) from the front (1a) of the radiator which is sufficiently large to create a space for the optional positioning of a condenser (3) between the radiator (1) and the fan hood (2).

2. A radiator unit in accordance with claim 1, characterised in that the interlocking means consist of a pin which projects upward from one of the supporting platforms (18), of holes (21) made in the other supporting platform (18') and of corresponding pins (27) and holes (25) in the fan hood.

3. A radiator unit in accordance with claim 2, characterised in that each of the holes (25) in the base plate (24) on the fan hood (2) is fitted with a flexible sleeve (44) which surrounds the corresponding pin (19) on the radiator tank.

4. A radiator unit in accordance with claim 3, characterised in that the flexible sleeve (44) sits snugly in the hole (25).

5. A radiator unit in accordance with claim 4, characterised in that the supporting platforms (18, 18') are positioned one below the other in two parallel planes.

6. A radiator unit in accordance with claim 5, characterised in that the supporting platforms (18') in the lower plane are provided with holes (21, 21') and the corresponding base plates (26) on the fan hood (2) are provided with pins (27).

7. A radiator unit in accordance with claim 6, characterised in that at least one of the holes (21') in the supporting platforms (18') is designed in the form of an elongated hole (21') which runs parallel to the pipe axes (20).

8. A radiator unit in accordance with claim 7, characterised in that the devices to attach the radiator tanks to the vehicle consist of pins (5) on the underside (during installation) and guide holes (15) for fastening screws (41) on the upper side.

9. A radiator unit in accordance with claim 8, characterised in that the guide holes (15) and pins (5) are provided at the opposite ends of each of the two radiator tanks (4, 4') which lie to the side of the ribbed pipe block in the installation position.

10. A radiator unit in accordance with claim 9, characterised in that the guide holes consist of guide holes (15) made in the radiator tanks for tapped bushes (40) into which the fastening screws can be inserted.

11. A radiator unit in accordance with claim 10, characterised in that the tapped bushes (40) are fitted with a rubber casing which fits into the guide holes (15).

12. A radiator unit in accordance with claim 11, characterised in that the upper end of the fan hood (2) is provided with two projections (35) each with a bearing platform (36) and one upward projecting pin (37), and that the upper end of the condenser (3) is provided with two holding brackets (31) which correspond to the bearing platforms on the fan hood (2), each of which has a hole (33) into which the pin (37) on the fan hood (2) fits.

13. A radiator unit in accordance with claim 12, characterised in that at least one of the holes (33') in the holding bracket (31) on the condenser (3) is designed in the form of an elongated hole which runs parallel to the pipe axes (28) of the condenser.

14. A radiator unit in accordance with one of claims 11 to 13, characterised in that the lower end of the fan hood (2) facing away from the bearing platform (36) is provided with two guide angles (34) to hold the sides of the condenser.

15. A radiator unit in accordance with one of claims 1 to 14, characterised in that the pins (19, 37) are held in the corresponding holes by means of stop springs.

## Revendications

1. Unité de refroidissement pour un moteur de véhicule automobile, comprenant un radiateur, composé d'un faisceau de tubes à ailettes maintenu entre des boîtés à eau (4, 4'), et une enveloppe de ventilateur(s) ou tuyère (2) fixée au radiateur et contenant au moins un ventilateur de refroidissement (8, 8') intégré et mû par un moteur électrique, avec coordination aux boîtes à eau de dispositifs pour la fixation au véhicule, les boîtes à eau étant pourvues, pour la fixation de la tuyère, d'appendices dépassant vers un côté et présentant des évidements ou des saillies, pouvant être assemblés à complémentarité de formes, par emboîtement, avec des appendices correspondants prévus sur la tuyère, caractérisée en ce que les appendices (16, 17) des boîtes à eau (4, 4') sont pourvus chacun d'une plateforme d'appui (18, 18') située dans un plan parallèle aux axes (20) des tubes, et qu'une plaque de support (26, 24) de conformation correspondante, agencée sur un appendice (22, 23) de la tuyère (2), est coordonnée à chaque plateforme d'appui (18, 18') des boîtes à eau (4, 4'), les dispositifs (tenons à emboîtement 19, perçages 21) prévus dans les plateformes d'appui (18, 18') pour l'assemblage à complémentarité de formes par emboîtement des boîtes à eau et de la tuyère, étant placés à une distance (a) suffisamment grande du côté frontal (1a) du radiateur pour créer un espace d'insertion en vue du montage sélectif d'un condenseur (3) entre le radiateur (1) et la tuyère (2).

2. Unité de refroidissement selon la revendication 1, caractérisée en ce que les moyens pour l'assemblage à complémentarité de formes par emboîtement sont constitués chaque fois d'un tenon à emboîtement faisant saillie vers le haut à partir d'une des plateformes d'appui (18) et d'un perçage (21) prévu dans l'autre plateforme d'appui (18'), ainsi que de tenons à emboîtement (27) et de perçages (21) correspondants coordonnés à la tuyère.

3. Unité de refroidissement selon la revendication 2, caractérisée en ce que chacun des perçages (25) des plaques de support (24) de la tuyère (2) est pourvu d'un manchon élastique (44) qui entoure le tenon à emboîtement (19) coordonné de la boîte à eau.

4. Unité de refroidissement selon la revendication 3, caractérisée en ce que le manchon élastique (44) est disposé à complémentarité de formes dans les perçages (25).

5. Unité de refroidissement selon la revendication 4, caractérisée en ce que les plateformes d'appui (18, 18') sont agencées l'une au-dessous de l'autre en deux plans parallèles.

6. Unité de refroidissement selon la revendication 5, caractérisée en ce que les plateformes d'appui (18') du plan inférieur sont pourvues de perçages (21, 21') et les plaques de support (26) correspondantes de la tuyère (2) sont pourvues de tenons à emboîtement (27).

7. Unité de refroidissement selon la revendication 6, caractérisée en ce que l'un au moins (21') des perçages des plateformes d'appui (18') est réalisé sous la forme d'un trou oblong (21') orienté parallèlement aux axes (20) des tubes.

8. Unité de refroidissement selon la revendication 7, caractérisée en ce que les dispositifs pour la fixation des boîtes à eau au véhicule sont constitués de tenons à emboîtement (5) situés sur le côté inférieur lors du montage et d'ouvertures d'introduction (15) pour des vis de fixation (41) sur le côté supérieur.

9. Unité de refroidissement selon la revendication 8, caractérisée en ce que les ouvertures d'introduction (15) et les tenons à emboîtement (5) sont situés chaque fois sur les extrémités opposées de chacune des deux boîtes à eau (4, 4'), lesquelles boîtes sont placées latéralement par rapport au faisceau de tubes à ailettes à la position montée.

10. Unité de refroidissement selon la revendication 9, caractérisée en ce que les ouvertures d'introduction sont constituées par des guides (15) formés dans les boîtes à eau pour des douilles filetées (40) dans lesquelles peuvent être engagées des vis de fixation.

11. Unité de refroidissement selon la revendication 10, caractérisée en ce que les douilles filetées (40) sont pourvues d'un gainage en caoutchouc (43) qui s'ajuste dans les guides (15).

12. Unité de refroidissement selon la revendication 11, caractérisée en ce que la tuyère (2) est munie, à son extrémité supérieure, de deux appendices (35) présentant chacun une plateforme porteuse (36) et un tenon à emboîtement (37) faisant saillie vers le haut, et le condenseur (3) est muni, à son extrémité supérieure, de deux pattes de suspension (31) coordonnées aux plateformes porteuses de la tuyère (2) et qui présentent chacune un perçage (33) pour l'introduction d'un tenon à emboîtement (37) de la tuyère (2).

13. Unité de refroidissement selon la revendication 12, caractérisé en ce que l'un au moins (33') des perçages des pattes de suspension (31) du condenseur (3) est réalisé sous la forme d'un trou oblong orienté parallèlement aux axes (28) des tubes du condenseur.

14. Unité de refroidissement selon une des revendication 11 à 13, caractérisée en ce que la tuyère (2) est munie en outre, à son extrémité inférieure éloignée des plateformes porteuses (36), de deux équerres latérales de guidage (34) servant à entourer le condenseur latéralement.

15. Unité de refroidissement selon une des revendications 1 à 14, caractérisée en ce que les tenons à emboîtement (19, 37) sont maintenus dans les perçages coordonnés par des segments d'arrêt.
